# EUROPÄISCHE PATENTSCHRIFT

(11) **EP 0 999 943 B1**
(45) Veröffentlichungstag und Bekanntmachung des Hinweises auf die Patenterteilung: **13.03.2002**
(21) Anmeldenummer: 97910276.1
(22) Anmeldetag: 31.07.1997
(51) Int. Cl.: B60H 1/00, F28D 20/02, F01P 5/10

(54) **KÜHLER EINES KRAFTFAHRZEUGVERBRENNUNGSMOTORS**
COOLER FOR USE IN A VEHICLE COMBUSTION ENGINE
RADIATEUR POUR MOTEUR A COMBUSTION INTERNE D'AUTOMOBILE

(43) Veröffentlichungstag der Anmeldung: 17.05.2000
(73) Patentinhaber: Pierburg Aktiengesellschaft, 41460 Neuss (DE)
(72) Erfinder: GENSTER, Albert, D-45768 Marl (DE); KECH, Hansjürgen, D-58313 Herdecke (DE); SCHMALFUSS, Horst-Georg, D-58540 Meinerzhagen (DE); HUNNEKUHL, Gerhard, D-58452 Witten (DE)
(74) Vertreter: Cohausz, Helge B., Dipl.-Ing.
(86) Internationale Anmeldenummer: EP9704643
(87) Internationale Veröffentlichungsnummer: WO9906232

(56) Entgegenhaltungen:
- EP-A- 0 276 739
- EP-A- 0 584 850
- PATENT ABSTRACTS OF JAPAN vol. 014, no. 266 (M-0982), 8.Juni 1990 & JP 02 077316 A (SANDEN CORP), 16.März 1990,
- PATENT ABSTRACTS OF JAPAN vol. 017, no. 053 (M-1361), 3.Februar 1993 & JP 04 263787 A (KOBE STEEL LTD), 18.September 1992,

## Beschreibung

Es ist bekannt, im Kühlmittelkreislauf eines Verbrennungsmotors sowohl einen Kühler als auch einen Latentwärmespeicher anzuordnen. Das Kühlmittel wird durch eine Pumpe umgetrieben und im Motorraum des Kraftfahrzeugs bilden Motor, Kühler und Latentwärmespeicher sowie die Pumpe des Kühlmittelkreislaufes getrennte Einheiten, die im Motorraum nacheinander montiert werden. Aus der gattungsgemäßen Europäischen Patentschrift EP-A-0 584 850 ist es nur bekannt, die Kühlmittelpumpe und den Kühler innerhalb einer Kühlerabdeckungsvorrichtung anzuordnen. Aus der Japanischen Patentschrift JP-A-0277 316 ist ein Wärmespeicher für Automobile bekannt. Dieser Wärmespeicher ist ein Bauteil für sich, d.h. er bildet keine bauliche Einheit mit der Kühlmittelpumpe und/oder dem Motor.

Aufgabe der Erfindung ist es, Herstellung, Montage und Reparatur, insbesondere auch Austausch der Aggregate eines Kühlmittelkreislaufes zu vereinfachen und preiswerter zu gestalten, wobei auch der Platzbedarf verringert werden soll.

Diese Aufgabe wird erfindungsgemäß dadurch gelöst, daß am Kühler ein Latentwärmespeicher und eine Motorpumpe befestigt ist, die im Kühlwasserkreislauf angeschlossen sind, und daß Kühler, Latentwärmespeicher und Pumpe eine bauliche Einheit bilden.

Hierdurch bildet der Kühler zusammen mit dem Latentwärmespeicher und der das Kühlmittel umwälzenden Motorpumpe eine bauliche Einheit, die Herstellung und Montage wesentlich vereinfacht. Ferner werden Reparaturen erleichtert und es wird wesentlich weniger Platz im Motorraum benötigt.

Besonders vorteilhaft ist es, wenn der Latentwärmespeicher und/oder die Punpe längs an der Ober-, Unter- und/oder Stirnseite des Kühlers angeordnet ist/sind. Auch ist konstruktiv und für das Einsparen von Platz von Vorteil, wenn die Pumpe an einer Stirnseite des Latentwärmespeichers koaxial befestigt ist.

Besonders vorteilhaft ist es, wenn das Pumpengehäuse auf der dem E-Motor abgewandten Seite eine ebene Anschlußfläche mit Ein- und Auslaß aufweist, mit der die Pumpe an dem Kühler und/oder dem Latentwärmespeicher befestigt ist. Hierbei kann zwischen Anschlußfläche und Pumpe und/oder Kühler eine Scheibe befestigt sein, die eine hydraulische Verteilung und/oder ein Ventil (insbesondere ein Dreiwegeventil) aufweist.

Ein besonders günstiger Einsatz einer Pumpe ist dann gegeben, wenn die Pumpe eine Rohrpumpe ist, deren Laufrad koaxial durchflossen ist. Auch kann der E-Motor der Pumpe einen Magnetläufer aufweisen, wodurch die Pumpe sehr wenig Platz benötigt und scheibenförmig an das benachbarte Aggregat befestigbar ist.

Eine weitere Integration und Verringerung des Platzbedarfs wird erreicht, wenn auf einer Stirnseite der Pumpe und/oder des Latentwärmespeichers ein Gehäuse befestigt ist, das elektronische Bauteile zur Regelung aufweist.

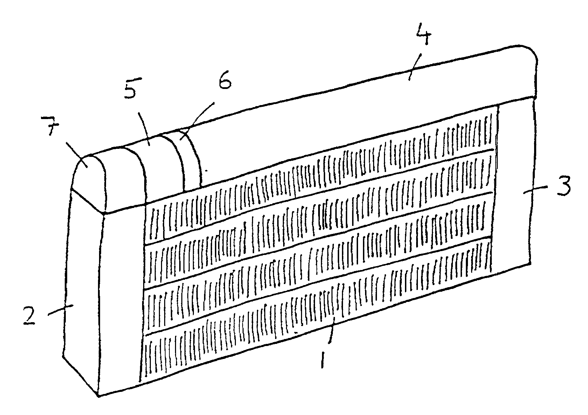

Ein Ausführungsbeispiel der Erfindung ist in der Zeichnung in einer Perspektive dargestellt und wird im folgenden näher beschrieben.

Ein in einem Kühlwasserkreislauf eines Kraftfahrzeugverbrennungsmotors angeschlossener Kühler 1 mit geringerer Höhe als Breite weist zu beiden Seiten je einen Sammler auf, wobei der erste Sammler 2 den Vorlauf des Kühlers und der zweite Sammler 3 den Rücklauf bildet. Auf der Oberseite des Kühler 1 sind mehrere Aggregate befestigt, die die gesamte Länge des Kühlers 1 einschließlich der beiden Sammler überdecken. Dies können unterschiedliche Aggregate sein, wie ein Latentwärmespeicher 4 und/oder eine Motorpumpe 5. Kühler 1, Speicher 4 und Pumpe 5 sind hierbei an denselben Kühlmittelkreislauf des Kraftfahrzeugmotors angeschlossen. Hierbei bilden Kühler 1, Latentwärmespeicher 4 und Motorpumpe 5 eine bauliche Einheit, die innerhalb der baulichen Einheit aneinander derart angeschlossen sind, daß sie vom Kühlmittel durchflossen werden.

Die Motorpumpe 5 ist entweder eine Rohrpumpe oder eine Spaltrohrpumpe, deren Pumpengehäuse auf der dem Elektromotor abgewandten Seite eine ebene Anschlußfläche mit Ein- und Auslaß aufweist. Mit dieser Anschlußseite ist die Pumpe an dem Kühler und/oder dem Latentwärmespeicher befestigt. Zwischen der Motorpumpe 5 und dem Latentwärmespeicher 4 oder auf der dem Latentwärmespeicher abgewandten Seite der Motorpumpe kann eine scheibenförmige hydraulische Verteilung und/oder ein Ventil, insbesondere ein Dreiwegeventil 6, befestigt sein, das insbesondere durch eine elektronische Einrichtung 7 gesteuert wird. Die Einrichtung 7 befindet sich innerhalb eines Gehäuses, das die elektronischen Bauteile zur Regelung aufweist und an der Stirnseite der Motorpumpe und/oder des Latentwärmespeichers befestigt ist.

In weiteren Alternativen kann der Motor der Motorpumpe 5 einen Magnetläufer aufweisen, wodurch die Motorpumpe eine besonders geringe axiale Länge besitzt. Ferner kann die Motorpumpe 5 auch an der anderen Stirnseite des Latentwärmespeichers 4 befestigt sein.

In weiteren, nicht dargestellten Alternativen sind der Latentwärmespeicher 4 und/oder die Motorpumpe 5 und möglicherweise auch die Teile 6 und 7 nicht an der Oberseite des Kühlers 1, sondern an seiner Unterseite, an einer oder beiden Stirnseiten und/oder an der vorderen oder hinteren Rückseite des Kühlers 1 befestigt.

## Patentansprüche

1. Kühleranordnung für den Kühlwasserkreislauf eines Kfz.-Verbrennungsmotors, **dadurch gekennzeichnet, daß** am Kühler (1) ein Latentwärmespeicher (4) und eine Motorpumpe (5) befestigt ist, die im Kühlwasserkreislauf angeschlossen sind, und daß Kühler (1), Latentwärmespeicher (4) und Pumpe (5) eine bauliche Einheit bilden.

2. Kühleranordnung nach Anspruch 1, **dadurch gekennzeichnet, daß** der Latentwärmespeicher (4) und/oder die Pumpe (5) längs an der Ober-, Unter- und/oder Stirnseite des Kühlers (1) angeordnet ist/sind.

3. Kühleranordnung nach einem der vorhergehenden Ansprüche, **dadurch gekennzeichnet, daß** die Pumpe (5) an einer Stirnseite des Latentwärmespeichers (4) koaxial befestigt ist.

4. Kühleranordnung nach einem der vorhergehenden Ansprüche, **dadurch gekennzeichne**t, daß der Motor für die Pumpe ein E-Motor ist, und daß das Pumpengehäuse auf der dem E-Motor abgewandten Seite eine ebene Anschlußfläche mit Ein- und Auslaß aufweist, mit der die Pumpe (5) an dem Kühler (1) und/oder an dem Latentwärmespeicher (4) befestigt ist.

5. Kühleranordnung nach Anspruch 4, **dadurch gekennzeichnet, daß** zwischen Anschlußfläche und Pumpe (5) und/oder Kühler (1) eine Scheibe (6) befestigt ist, die eine hydraulische Verteilung und/oder ein Ventil (insbesondere ein Dreiwegeventil) aufweist.

6. Kühleranordnung nach einem der Ansprüche 1 bis 3, **dadurch gekennzeichnet, daß** die Pumpe (5) eine Rohrpumpe ist, deren Laufrad koaxial durchflossen ist.

7. Kühleranordnung nach einem der vorhergehenden Ansprüche, **dadurch gekennzeichnet, daß** der E-Motor der Pumpe (5) einen Magnetläufer aufweist.

8. Kühleranordnung nach einem der vorhergehenden Ansprüche, **dadurch gekennzeichnet, daß** auf einer Stirnseite der Pumpe (5) und/oder des Latentwärmespeichers (4) ein Gehäuse (7) befestigt ist, das elektronische Bauteile zur Regelung aufweist.

## Claims

1. A radiator arrangement for the coolant circuit of a motor vehicle combustion engine, **characterized in that** fixed to the radiator (1) are a latent heat accumulator (4) and a motor pump (5) which are connected in the coolant circuit, and that the radiator (1), latent heat accumulator (4) and pump (5) form one structural unit.

2. A radiator arrangement according to Claim 1, **characterized in that** the latent heat accumulator (4) and/or the pump (5) is/are arranged longitudinally on the upper side, the lower side and/or on the end face of the radiator (1).

3. A radiator arrangement according to either of the preceding claims, **characterized in that** the pump (5) is fixed coaxially to an end face of the latent heat accumulator (4).

4. A radiator arrangement according to any of the preceding claims, **characterized in that** the motor for the pump is an electric motor, and that the pump housing comprises on the side facing away from the electric motor a plane connection face with inlet and outlet, with which the pump (5) is fixed to the radiator (1) and/or to the latent heat accumulator (4).

5. A radiator arrangement according to Claim 4, **characterized in that** between the connection face and pump (5) and/or radiator (1) is fixed a disk (6) comprising a hydraulic distributor and/or a valve (in particular a three-way directional valve).

6. A radiator arrangement according to any of Claims 1 to 3, **characterized in that** the pump (5) is a cylindrical pump, the impeller of which is traversed coaxially by the fluid.

7. A radiator arrangement according to any of the preceding claims, **characterized in that** the electric motor of the pump (5) comprises a permanent-magnet rotor.

8. A radiator arrangement according to any of the preceding claims, **characterized in that** on one end face of the pump (5) and/or the latent heat accumulator (4) is fixed a housing (7) comprising the electronic components for control.

## Revendications

1. Un arrangement de refroidisseur, destiné au circuit d'eau de refroidissement d'un moteur à combustion d'une automobile, **caractérisé en ce que** un accumulateur (4) de chaleur latente et une pompe (5) à moteur, qui sont raccordés au circuit d'eau de refroidissement, sont fixés au niveau du refroidisseur (1) et que le refroidisseur (1), l'accumulateur (4) de chaleur latente et la pompe (5) constituent une unité constructive.

2. Un arrangement de refroidisseur conforme à la revendication n° 1, **caractérisé en ce que** l'accumulateur (4) de chaleur latente et/ou la pompe (5) est/sont disposé/disposés le long du côté supérieur, du côté inférieur et/ou de la face du refroidisseur (1).

3. Un arrangement de refroidisseur conforme à une des revendications précédentes, **caractérisé en ce que** la pompe (5) est fixée, dans la direction coaxiale, sur une face de l'accumulateur (4) de chaleur latente.

4. Un arrangement de refroidisseur conforme à une des revendications précédentes, **caractérisé en ce que** le moteur dédié à la pompe est un moteur électrique et que, sur la face détournée du moteur électrique, le corps de pompe présente une surface de raccordement plane dotée d'une entrée et d'une sortie, à l'aide de laquelle la pompe (5) est raccordée au refroidisseur (1) et/ou à l'accumulateur (4) de chaleur latente.

5. Un arrangement de refroidisseur conforme à la revendication n° 4, **caractérisé en ce que**, entre la surface de raccordement et la pompe (5) et/ou le refroidisseur (1), est fixé un disque (6), qui présente une répartition hydraulique et/ou une valve (en particulier un distributeur à trois voies).

6. Un arrangement de refroidisseur conforme à une des revendications n° 1 à n° 3, **caractérisé en ce que** la pompe (5) est une pompe cylindrique, dont la roue d'actionnement est traversée par le fluide dans la direction coaxiale.

7. Un arrangement de refroidisseur conforme à une des revendications précédentes, **caractérisé en ce que** le moteur électrique de la pompe (5) présente un rotor à aimants.

8. Un arrangement de refroidisseur conforme à une des revendications précédentes, **caractérisé en ce que** un corps (7) est fixé sur une face de la pompe (5), et/ou de l'accumulateur (4) de chaleur latente, et présente des composants électroniques pour la régulation.
